# EUROPEAN PATENT SPECIFICATION

(11) **EP 3 960 497 B1**
(45) Date of publication and mention of the grant of the patent: **29.11.2023**
(21) Application number: 21190810.8
(22) Date of filing: 11.08.2021
(51) Int. Cl.: B60C 9/22, B60C 9/28, B60C 11/03

(54) **TIRE**
REIFEN
PNEUMATIQUE

(30) Priority: 27.08.2020 JP 2020143483
(43) Date of publication of application: 02.03.2022
(73) Proprietor: Sumitomo Rubber Industries, Ltd., Kobe-shi, Hyogo-ken 651-0072 (JP)
(72) Inventor: ONITSUKA, Rena, Kobe-shi, 651-0072 (JP); ARAI, Mahito, Kobe-shi, 651-0072 (JP)
(74) Representative: Manitz Finsterwald Patent- und Rechtsanwaltspartnerschaft mbB

(56) References cited:
- EP-A2- 2 657 047
- EP-A2- 3 351 406
- JP-A- 2003 182 307
- JP-A- 2012 046 061
- JP-A- 2013 220 755

## Description

### BACKGROUND OF THE INVENTION

### Field of the Invention

The present invention relates to a tire. Specifically, the present invention relates to a tire for a passenger car.

### Description of the Background Art

A band provided between a tread and a belt includes a band cord extending substantially in the circumferential direction. As this band, a full band that covers the entirety of the belt and an edge band that covers an end of the belt are known.

The band is formed by spirally winding a band strip including a band cord. Usually, the band strip is densely wound without any gap, but it has been considered to sparsely wind the band strip with a gap (for example, Japanese Laid-Open Patent Publication No. 2003-182307).

A tire in accordance with the preamble of claim 1 is known from JP 2003 182307 A and EP 2 657 047 A2. A related tire is known from JP 2013 220755 A.

When the band is formed by sparsely winding the band strip, the holding force by the band is decreased. The decrease in holding force influences the contour shape of a ground-contact surface, of a tire, that is in contact with a road surface. If the ground-contact length is increased and the ground-contact area is increased, an increase in rolling resistance and a decrease in steering stability may be caused. For example, when a thin tread is adopted, an increase in rolling resistance can be suppressed. However, a portion at the bottom of a circumferential groove formed on the tread is also thin, so that there is a concern that damage such as cracks may occur if strain is concentrated on this portion.

The present invention has been made in view of the above circumstances, and an object of the present invention is to provide a tire that can have reduced rolling resistance while suppressing the influence on durability and steering stability.

### SUMMARY OF THE INVENTION

A tire according to an aspect of the present invention includes: a tread having a plurality of circumferential grooves formed thereon; a belt located inward of the tread in a radial direction; and a band located between the tread and the belt in the radial direction and formed of a spirally wound band strip including a plurality of band cords aligned with each other. The band includes a full band covering an entirety of the belt, and a pair of edge bands disposed so as to be spaced apart from each other in an axial direction and each covering an end of the belt. A cross-section of the band includes a large number of cross-sections of the band strip. A plurality of cross-sections of the band strip are aligned with a gap therebetween in a cross-section of the full band. A plurality of cross-sections of the band strip are aligned without any gap therebetween in a cross-section of each edge band. Among the plurality of circumferential grooves, a circumferential groove located on each outer side in the axial direction is a shoulder circumferential groove, and an inner end of each edge band is located so as to be spaced apart from a bottom of the shoulder circumferential groove in the axial direction.

Preferably, in the tire, among the plurality of circumferential grooves, a circumferential groove having a maximum groove width is a wide circumferential groove, and a size of the gap is smaller than a bottom width of the wide circumferential groove.

Preferably, in the tire, a distance in the axial direction from an equator plane to the end of the belt is a reference width, a position at which a distance in the axial direction from the equator plane corresponds to 0.75 times the reference width is a reference position, and the shoulder circumferential groove is located inward of the reference position in the axial direction.

Preferably, in the tire, each band cord is a cord formed from a nylon fiber or a hybrid cord obtained by twisting a strand formed from a nylon fiber and a strand formed from an aramid fiber.

Preferably, in the tire, the inner end of each edge band is located outward of the shoulder circumferential groove in the axial direction, and a ratio of a distance in the axial direction from the end of the belt to the inner end of each edge band to a distance in the axial direction from the end of the belt to the bottom of the shoulder circumferential groove is not less than 0.25 and not greater than 0.90.

Preferably, in the tire, the inner end of each edge band is located inward of the shoulder circumferential groove in the axial direction, and a ratio of a distance in the axial direction from the end of the belt to the inner end of each edge band to a distance in the axial direction from the end of the belt to the bottom of the shoulder circumferential groove is not less than 1.20 and not greater than 1.55.

In the inventive tire, on a reference ground-contact surface obtained by applying a normal load as a vertical load to the tire and bringing the tire into contact with a flat road surface in a state where the tire is fitted to a normal rim, an internal pressure of the tire is adjusted to a normal internal pressure, and a camber angle of the tire is set to 0°, a shape index of the reference ground-contact surface that is represented as a ratio of an equator ground-contact length measured along the equator plane to a reference ground-contact length at a position corresponding to a width of 80% of a reference ground-contact width of the reference ground-contact surface is not less than 1.10 and not greater than 1.50.

According to the present invention, a tire that can have reduced rolling resistance while suppressing the influence on durability and steering stability is obtained.

### BRIEF DESCRIPTION OF THE DRAWINGS

FIG. 1 is a cross-sectional view showing a part of a tire according to an embodiment of the present invention;
FIG. 2 is a perspective view showing a band strip;
FIGS. 3(a) to 3(c) are each a schematic diagram illustrating a method for forming a band;
FIG. 4 is a cross-sectional view showing a part of the tire shown in FIG. 1;
FIG. 5 is an image diagram illustrating a method for calculating a shape index of a ground-contact surface; and
FIG. 6 is a cross-sectional view showing a part of a tire according to another embodiment of the present invention.

### DESCRIPTION OF THE PREFERRED EMBODIMENTS

Hereinafter, the present invention will be described in detail based on preferred embodiments with appropriate reference to the drawings.

In the present disclosure, a state where a tire is fitted to a normal rim, the internal pressure of the tire is adjusted to a normal internal pressure, and no load is applied to the tire is referred to as a normal state. In the present invention, unless otherwise specified, the dimensions and angles of components of the tire are measured in the normal state.

The normal rim means a rim specified in a standard on which the tire is based. The "standard rim" included in applicable rims in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures. In the case where the tire is for a passenger car, unless otherwise specified, the normal internal pressure is 180 kPa.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads. In the case where the tire is for a passenger car, unless otherwise specified, the normal load is a load equal to 88% of the above load.

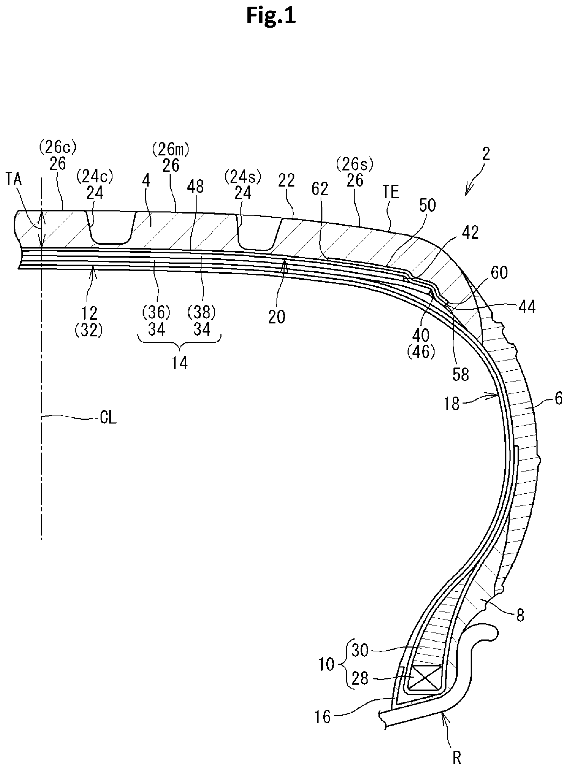

FIG. 1 shows a part of a tire 2 according to an embodiment of the present invention. The tire 2 is mounted to a passenger car. In FIG. 1, the tire 2 is fitted to a rim R. The rim R is a normal rim. The interior of the tire 2 is filled with air, and the internal pressure of the tire 2 is adjusted to a normal internal pressure. The tire 2 is in a normal state. The tire 2 fitted to the rim R is also referred to as a tire-rim complex. The tire-rim complex includes the rim R and the tire 2 fitted to the rim R.

FIG. 1 shows a part of a cross-section of the tire 2 along a plane including the rotation axis of the tire 2. In FIG. 1, the right-left direction is the axial direction of the tire 2, and the up-down direction is the radial direction of the tire 2. The direction perpendicular to the surface of the sheet of FIG. 1 is the circumferential direction of the tire 2. In FIG. 1, an alternate long and short dash line CL represents the equator plane of the tire 2.

The tire 2 includes a tread 4, a pair of sidewalls 6, a pair of clinches 8, a pair of beads 10, a carcass 12, a belt 14, a pair of chafers 16, an inner liner 18, and a band 20.

The tread 4 is formed from a crosslinked rubber for which wear resistance and grip performance are taken into consideration. The tread 4 comes into contact with a road surface at an outer surface 22 (also referred to as a tread surface) thereof.

In FIG. 1, reference character TE represents a position, on the tread surface 22, corresponding to an end of a ground-contact surface, of the tire 2, which is in contact with a road surface, specifically, an outer end in the axial direction of the ground-contact surface. In the tire 2, the position TE is also referred to as a ground-contact reference position.

A ground-contact surface for specifying the ground-contact reference position TE (also referred to as reference ground-contact surface) is obtained, for example, using a ground-contact surface shape measuring device (not shown). The reference ground-contact surface is obtained by applying a normal load as a vertical load to the tire 2 and bringing the tire 2 into contact with a flat road surface in a state where the tire 2 is fitted to the rim R, the internal pressure of the tire 2 is adjusted to the normal internal pressure, and the camber angle of the tire 2 is set to 0°, on this device. In the tire 2, the ground-contact width of the reference ground-contact surface (also referred to as reference ground-contact width) is represented as the distance in the axial direction from one ground-contact reference position TE to the other ground-contact reference position TE, measured along the tread surface 22.

As shown in FIG. 1, a plurality of circumferential grooves 24 are formed on the tread 4 of the tire 2 so as to extend in the circumferential direction. On the tread 4 of the tire 2, four circumferential grooves 24 are formed. These circumferential grooves 24 are aligned in the axial direction. Among these circumferential grooves 24, the circumferential groove 24 located on each outer side in the axial direction is a shoulder circumferential groove 24s. The circumferential grooves 24 located on the inner side in the axial direction are center circumferential grooves 24c.

The groove width and the groove depth of each circumferential groove 24 are determined in consideration of drainage performance and grip performance. In the tire 2, the groove width of each circumferential groove 24 is not less than 1% and not greater than 15% of the reference ground-contact width. The groove depth of each circumferential groove 24 is not less than 5 mm and not greater than 10 mm. The groove width is represented as the distance from one edge of the circumferential groove 24 to the other edge of the circumferential groove 24. The groove depth is represented as the distance from an edge of the circumferential groove 24 to the bottom of the circumferential groove 24.

By forming the circumferential grooves 24, a plurality of land portions 26 are formed in the tread 4. Among these land portions 26, the land portion 26 located on each outer side in the axial direction is a shoulder land portion 26s. The land portion 26 located on the inner side in the axial direction is a center land portion 26c. The land portion 26 located between the center land portion 26c and each shoulder land portion 26s is a middle land portion 26m. The center land portion 26c of the tire 2 is located on the equator plane CL.

In FIG. 1, the length indicated by a double-headed arrow TA is the thickness of the tread 4. The thickness TA is obtained by measuring the distance from the outer surface of the band 20 to the tread surface 22 along the equator plane CL. In the tire 2, the thickness TA is not less than 4 mm and not greater than 15 mm.

Each sidewall 6 is connected to an end of the tread 4. The sidewall 6 is located radially inward of the tread 4. The sidewall 6 extends from the end of the tread 4 toward the clinch 8. The sidewall 6 is formed from a crosslinked rubber for which cut resistance is taken into consideration.

Each clinch 8 is located radially inward of the sidewall 6. The clinch 8 comes into contact with the rim R. The clinch 8 is formed from a crosslinked rubber for which wear resistance is taken into consideration.

Each bead 10 is located axially inward of the clinch 8. The bead 10 includes a core 28 and an apex 30. Although not shown, the core 28 includes a wire made of steel. The apex 30 is located outward of the core 28 in the radial direction. The apex 30 is formed from a crosslinked rubber that has high stiffness.

The carcass 12 is located inward of the tread 4, the pair of sidewalls 6, and the pair of clinches 8. The carcass 12 extends on and between one bead 10 and the other bead 10. The carcass 12 has a radial structure.

The carcass 12 includes at least one carcass ply 32. The carcass 12 of the tire 2 is composed of one carcass ply 32. The carcass ply 32 is turned up around each core 28.

The carcass ply 32 includes a large number of carcass cords aligned with each other, which are not shown. These carcass cords are covered with a topping rubber. Each carcass cord intersects the equator plane CL. The carcass cords are cords formed from an organic fiber. Examples of the organic fiber include nylon fibers, rayon fibers, polyester fibers, and aramid fibers.

The belt 14 is located inward of the tread 4 in the radial direction. In the tire 2, the belt 14 is located between the carcass 12 and the band 20 on the inner side of the tread 4. The belt 14 is stacked on the carcass 12. The width of the belt 14 of the tire 2 is not less than 55% and not greater than 90% of a cross-sectional width (see JATMA or the like) of the tire 2.

The belt 14 includes at least two layers 34 stacked in the radial direction. The belt 14 of the tire 2 is composed of two layers 34 stacked in the radial direction. Of the two layers 34, the layer 34 located on the inner side is an inner layer 36, and the layer 34 located on the outer side is an outer layer 38. As shown in FIG. 1, the inner layer 36 has a width larger than that of the outer layer 38. In the axial direction, an end 40 of the inner layer 36 is located outward of an end 42 of the outer layer 38. The distance from the end 42 of the outer layer 38 to the end 40 of the inner layer 36 is not less than 3 mm and not greater than 10 mm.

Each of the inner layer 36 and the outer layer 38 includes a large number of belt cords aligned with each other, which are not shown. These belt cords are covered with a topping rubber. Each belt cord is inclined relative to the equator plane CL. The material of each belt cord is steel.

Each chafer 16 is located radially inward of the bead 10. The chafer 16 comes into contact with the rim R. In the tire 2, the chafer 16 includes a fabric and a rubber with which the fabric is impregnated.

The inner liner 18 is located inward of the carcass 12. The inner liner 18 forms an inner surface of the tire 2. The inner liner 18 is formed from a crosslinked rubber that has a low gas permeability coefficient. The inner liner 18 maintains the internal pressure of the tire 2.

The band 20 is located between the tread 4 and the belt 14 in the radial direction. The band 20 is stacked on the belt 14. In the axial direction, an end 44 of the band 20 is located outward of an end 46 of the belt 14. The distance from the end 46 of the belt 14 to the end 44 of the band 20 is not less than 5 mm and not greater than 10 mm.

The band 20 includes a band cord. In the tire 2, the band cord extends substantially in the circumferential direction. Specifically, an angle of the band cord relative to the circumferential direction is not greater than 5°. The band 20 has a jointless structure.

In the tire 2, the band 20 includes a full band 48 and a pair of edge bands 50. The full band 48 covers the entirety of the belt 14. The pair of edge bands 50 are disposed so as to be spaced apart from each other in the axial direction. Each edge band 50 covers the end 46 of the belt 14. In FIG. 1, the edge band 50 is located between the full band 48 and the tread 4. The edge band 50 may be located between the full band 48 and the belt 14.

Next, a method for manufacturing the tire 2 will be described. In the manufacture of the tire 2, the tread 4, the bead 10, the carcass 12, the belt 14, etc., are combined to prepare the tire 2 in an unvulcanized state, that is, a green tire for the tire 2 shown in FIG. 1. The green tire is placed in a mold (not shown), and is pressurized and heated in the mold. As a result, the green tire is vulcanized, and the tire 2 shown in FIG. 1 is obtained. The method for manufacturing the tire 2 includes a step of preparing the green tire and a step of vulcanizing the green tire.

In the manufacture of the tire 2, in the step of preparing the green tire, the band 20 in an unvulcanized state (hereinafter, green band) is formed. In the step of vulcanizing the green tire, the green band is vulcanized, and the band 20 forming a part of the tire 2 is obtained. Except for the formation of the band 20, the method is the same as the conventional manufacturing method, and thus the description thereof is omitted.

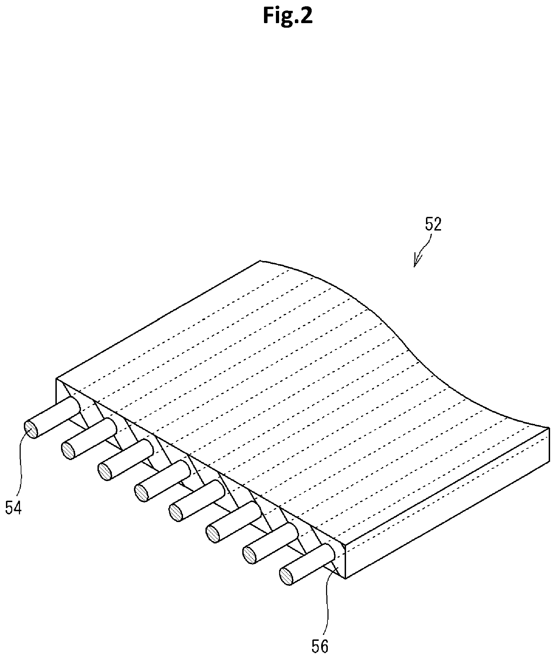

In the manufacture of the tire 2, a band strip 52 shown in FIG. 2 is used for forming the band 20. The band strip 52 includes a plurality of band cords 54 aligned with each other, and these band cords 54 are covered with a topping rubber 56. The band strip 52 has a band shape. The band cords 54 included in the band strip 52 extend in the longitudinal direction of the band strip 52.

The band strip 52 shown in FIG. 2 includes eight band cords 54. The number of band cords 54 included in the band strip 52 is not limited to eight. The number of band cords 54 included in the band strip 52 is determined as appropriate in consideration of the specifications of the tire 2, etc. In the tire 2, the number of band cords 54 included in the band strip 52 is not less than 2 and not greater than 15.

As described above, the band 20 of the tire 2 includes the full band 48 and the pair of edge bands 50. In the tire 2, the full band 48 and each edge band 50 are composed of band strips 52 having the same specifications. The full band 48 and each edge band 50 may be composed of band strips 52 having different specifications.

Although not shown, in the manufacture of the tire 2, the band 20 is formed on a drum of a shaping machine. After the belt 14 is formed on the drum, the band strip 52 is spirally wound while tension is applied to the band strip 52, whereby the band 20 is formed. In particular, in the manufacture of the tire 2, the full band 48 is formed by winding the band strip 52 with a gap, and each edge band 50 is formed by winding the band strip 52 without any gap. In other words, the full band 48 is formed by sparsely winding the band strip 52, and each edge band 50 is formed by densely winding the band strip 52.

In the manufacture of the tire 2, the winding tension of the band strip 52 is set in the range of not less than 10 N and not greater than 150 N. The winding tension is represented as a load (N) per band cord 54 included in the band strip 52.

In the manufacture of the tire 2, for forming the band 20, for example, one band strip 52 is prepared for the full band 48, and two band strips 52 are prepared for the edge bands 50.

Based on the position corresponding to the equator plane CL in the tire 2, the position corresponding to an end 58 of the full band 48, the position corresponding to an outer end 60 of each edge band 50, and the position corresponding to an inner end 62 of each edge band 50 are set on the drum of the shaping machine as an end-corresponding position of the full band 48, an outer end-corresponding position of the edge band 50, and an inner end-corresponding position of the edge band 50, respectively.

The band strip 52 for the full band 48 is sparsely wound from one end-corresponding position of the full band 48 toward the other end-corresponding position of the full band 48, whereby the full band 48 is formed. The band strip 52 for the edge band 50 is densely wound from the outer end-corresponding position of the edge band 50 toward the inner end-corresponding position of the edge band 50, whereby one edge band 50 is formed. Another band strip 52 for the edge band 50 is densely wound from the inner end-corresponding position of the edge band 50 toward the outer end-corresponding position of the edge band 50, whereby the other edge band 50 is formed. As a result, the band 20 is obtained. In the formation of the band 20, from the viewpoint of stable formation of the full band 48, an end 58 portion of the full band 48 (where the number of turns of the band strip 52 is about 1 to 2) may be formed by densely winding the band strip 52.

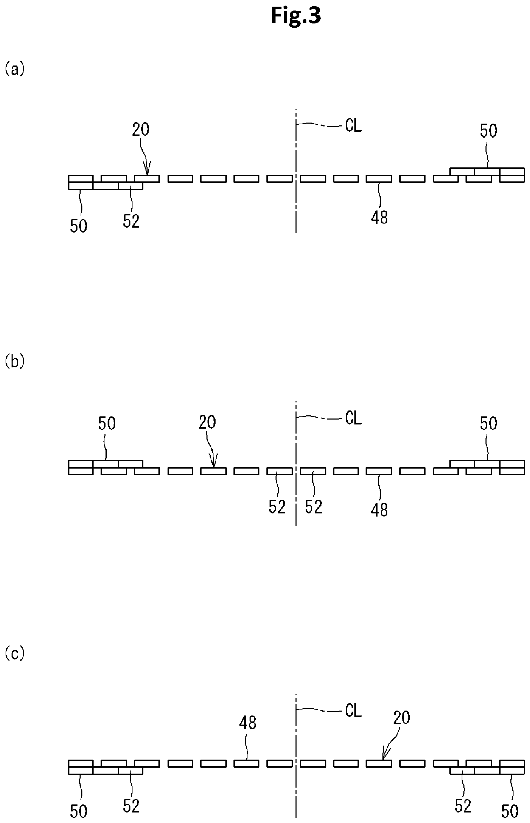

In the manufacture of the tire 2, from the viewpoint of being able to reduce the number of band strips 52 to be used for forming the band 20, for example, the band 20 may be formed by winding the band strip(s) 52 in each of the manners shown in FIGS. 3(a) to 3(c).

In the formation example of forming the band 20 shown in FIG. 3(a), the band 20 is formed using one band strip 52. In this formation example, the band strip 52 is densely wound outward in the axial direction from the inner end-corresponding position of one edge band 50, whereby the one edge band 50 is formed. This band strip 52 is sparsely wound from one end-corresponding position of the full band 48 toward the other end-corresponding position of the full band 48, whereby the full band 48 is formed. The band strip 52 is densely wound inward in the axial direction from the outer end-corresponding position of the other edge band 50, whereby the other edge band 50 is formed. As a result, the band 20 is obtained.

In the example of forming the band 20 shown in FIG. 3(b), the band 20 is formed using two band strips 52. In this formation example, the two band strips 52 are sparsely wound outward in the axial direction from the equator plane CL side, whereby the full band 48 is formed. The two band strips 52 are densely wound inward in the axial direction from the outer end-corresponding positions of the edge bands 50, whereby the right and left edge bands 50 are formed. As a result, the band 20 is obtained.

Also, in the example of forming the band 20 shown in FIG. 3(c), the band 20 are formed using two band strips 52. In this formation example, the two band strips 52 are densely wound outward in the axial direction from the inner end-corresponding positions of the edge bands 50, whereby the right and left edge bands 50 are formed. The two band strips 52 are sparsely wound from the end-corresponding positions of the full band 48 toward the equator plane CL, whereby the full band 48 is formed. As a result, the band 20 is obtained.

As described above, the band cords 54 included in the band 20 of the tire 2 extend substantially in the circumferential direction. The band 20 is formed by the band strip 52 including the band cords 54. The band strip 52 forming the band 20 also extends substantially in the circumferential direction. An angle of the band strip 52 relative to the circumferential direction is not greater than 5°.

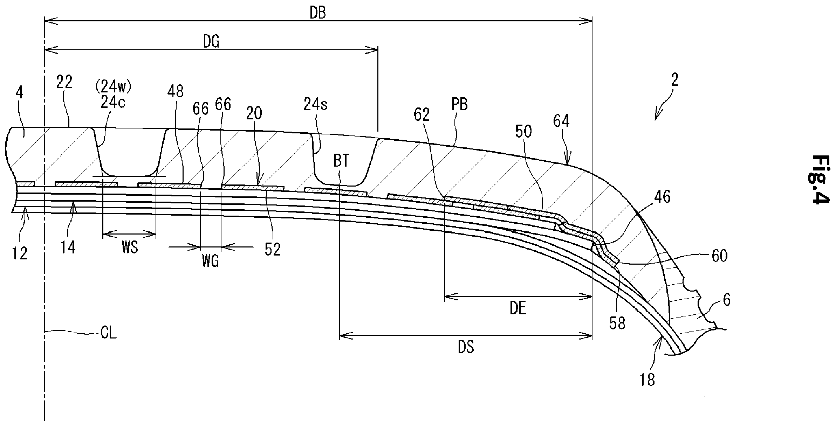

FIG. 4 shows a part of a cross-section of the tire 2 shown in FIG. 1. In FIG. 4, the right-left direction is the axial direction of the tire 2, and the up-down direction is the radial direction of the tire 2. The direction perpendicular to the surface of the sheet of FIG. 4 is the circumferential direction of the tire 2.

As described above, the band 20 of the tire 2 is formed by spirally winding the band strip 52. The band 20 is an element of the tire 2 that is formed by spirally winding the band strip 52. Therefore, as shown in FIG. 4, a cross-section of the band 20 includes a large number of cross-sections of the band strip 52. Since the full band 48 is formed by sparsely winding the band strip 52, a plurality of cross-sections of the band strip 52 are aligned with gaps therebetween in a cross-section of the full band 48. Since the pair of edge bands 50 located on the right and left sides are each formed by densely winding the band strip 52, a plurality of cross-sections of the band strip 52 are aligned without any gap therebetween in a cross-section of each edge band 50.

In the tire 2, since the full band 48 is formed by sparsely winding the band strip 52, the full band 48 contributes to weight reduction. On the other hand, the full band 48 decreases the holding force by the band 20. A decrease in holding force influences the contour of the ground-contact surface. If the ground-contact length is increased and the ground-contact area is increased, there is a concern that heat generation in the tire 2 is promoted. In this case, the weight reduction of the full band 48 cannot contribute to a reduction in rolling resistance.

However, the edge band 50 formed by densely winding the band strip 52 is located at each end portion (hereinafter, shoulder portion 64) of the tread 4 of the tire 2. In the tire 2, the edge band 50 effectively holds the shoulder portion 64 together with the full band 48. An increase in ground-contact length and an increase in ground-contact area are suppressed, so that heat generation caused by the increase in ground-contact area is suppressed. In the tire 2, the weight reduction of the full band 48 can effectively contribute to a reduction in rolling resistance. The tire 2 can have reduced rolling resistance.

Since an increase in ground-contact area is suppressed, good responsiveness is maintained in the tire 2. In the tire 2, the influence of the weight reduction of the full band 48 on steering stability is suppressed. The tire 2 can have reduced rolling resistance while suppressing the influence on steering stability.

In FIG. 4, reference character BT represents the bottom of the shoulder circumferential groove 24s. The bottom BT of the circumferential groove 24 is represented at the deepest part, but when the bottom spreads in the axial direction as in the shoulder circumferential groove 24s, the bottom BT is represented at the center position thereof.

In the tire 2, in the axial direction, the inner end 62 of the edge band 50 is located so as to be spaced apart from the bottom BT of the shoulder circumferential groove 24s. In the tire 2, specific strain being concentrated on the bottom BT portion of the shoulder circumferential groove 24s to cause damage such as cracks is prevented. The tire 2 can have reduced rolling resistance while suppressing the influence on durability and steering stability.

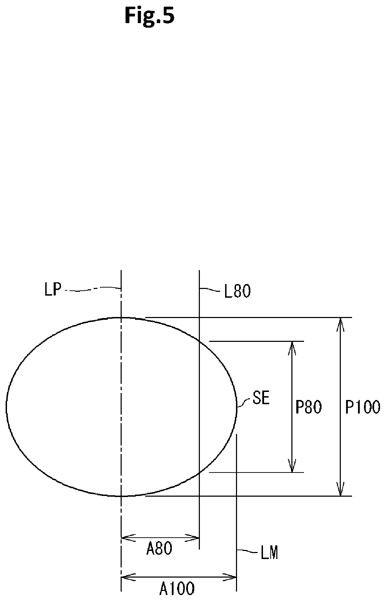

In the tire 2, whether the contour of the ground-contact surface is rounded is determined on the basis of a shape index F of the reference ground-contact surface. The shape index F will be described below with reference to FIG. 5.

FIG. 5 shows a model of the contour shape of the reference ground-contact surface. In FIG. 5, the up-down direction corresponds to the circumferential direction of the tire 2, and the right-left direction corresponds to the axial direction of the tire 2. The direction perpendicular to the sheet of FIG. 5 corresponds to the radial direction of the tire 2.

In FIG. 5, an alternate long and short dash line LP is a straight line, corresponding to the equator plane CL of the tire 2, on the reference ground-contact surface. If it is difficult to specify the equator plane CL on the reference ground-contact surface, the center line in the axial direction of the reference ground-contact surface is used as the straight line corresponding to the equator plane CL. A double-headed arrow P100 represents the length of a line of intersection between a plane including the straight line LP and the reference ground-contact surface. In the tire 2, the length P100 of the line of intersection is an equator ground-contact length measured along the equator plane CL on the reference ground-contact surface.

In FIG. 5, a solid line LM is a straight line that passes through an outer end in the axial direction (hereinafter, ground-contact end SE) of the reference ground-contact surface and is parallel to the straight line LP. A solid line L80 is a straight line that is located between the straight line LM and the straight line LP and is parallel to the straight line LM and the straight line LP. A double-headed arrow A100 represents the distance in the axial direction from the straight line LP to the straight line LM. The distance A100 corresponds to half the maximum width of the reference ground-contact surface, that is, the reference ground-contact width. A double-headed arrow A80 represents the distance in the axial direction from the straight line LP to the straight line L80. In FIG. 5, the ratio of the distance A80 to the distance A100 is set to 80%. That is, the straight line L80 represents the position corresponding to a width of 80% of the reference ground-contact width of the reference ground-contact surface. A double-headed arrow P80 represents the length of a line of intersection between a plane including the straight line L80 and the reference ground-contact surface. In the tire 2, the length P80 of the line of intersection is a reference ground-contact length at the position, corresponding to the width of 80% of the reference ground-contact width, on the reference ground-contact surface.

In the tire 2, the ratio (P100/P80) of the equator ground-contact length P100 to the reference ground-contact length P80, which is represented using the equator ground-contact length P100 and the reference ground-contact length P80 specified on the reference ground-contact surface, is used as the shape index F of the contour shape of the reference ground-contact surface. A higher value of the shape index F represents that the reference ground-contact surface has a more rounded contour.

In the tire 2, the shape index F of the reference ground-contact surface is not higher than 1.50. As described above, in the tire 2, whereas the full band 48 is formed by sparsely winding the band strip 52, each edge band 50 is formed by densely winding the band strip 52, whereby an increase in ground-contact length and an increase in ground-contact area are suppressed, and heat generation caused by the increase in ground-contact area is suppressed. That is, when the shape index F of the reference ground-contact surface is not higher than 1.50, an increase in rolling resistance due to rounding of the ground-contact surface is suppressed. On the other hand, if the shape index F is lower than 1.10, wear resistance is decreased. That is, when the shape index F is not lower than 1.10, good wear resistance is maintained. Therefore, in the tire 2, from the viewpoint of reducing rolling resistance while suppressing the influence on wear resistance, the shape index F of the reference ground-contact surface is not lower than 1.10, preferably not lower than 1.15, and more preferably not lower than 1.20. The shape index F is not higher than 1.50, preferably not higher than 1.45, and more preferably not higher than 1.40.

In FIG. 4, the length indicated by a double-headed arrow WG is the distance between a cross-section of one band strip included in the cross-section of the full band 48 and a cross-section of another band strip located adjacent to the cross-section of the one band strip. The distance WG is the size of a gap formed in the full band 48. A state where there is no gap means that the distance WG is not greater than 0.5 mm.

In the tire 2, from the viewpoint of being able to promote weight reduction of the full band 48 to effectively reduce rolling resistance, the size WG of the gap of the full band 48 is preferably not less than 2 mm and more preferably not less than 3 mm. From the viewpoint that the full band 48 can contribute to exerting the holding force of the band 20, the size WG of the gap is preferably not greater than 12 mm, more preferably not greater than 11m, and further preferably not greater than 10 mm.

In FIG. 4, a double-headed arrow WS represents the bottom width of the center circumferential groove 24c. The bottom width WS is represented as the distance between the boundaries between the bottom and the right and left groove walls. In the tire 2, among the four circumferential grooves 24 formed on the tread 4, the center circumferential groove 24c shown in FIG. 4 has a maximum groove width. The center circumferential groove 24c is also referred to as wide circumferential groove 24w. The bottom width WS of the center circumferential groove 24c is also the bottom width of the wide circumferential groove 24w.

The gap formed in the full band 48 is formed by edges 66 of the band strip 52. Since the full band 48 is formed by spirally winding the band strip 52, the edges 66 of the band strip 52 are located at the bottom portions of the circumferential grooves 24. If the size of the gap is larger than the bottom width of each circumferential groove 24, only one of the two edges 66 of the band strip 52, which form the gap, may be located at the bottom portion of the circumferential groove 24. In particular, if only one edge 66 is located at the bottom portion of the wide circumferential groove 24w having the maximum groove width, concentration of strain due to the edge 66 is likely to occur at the bottom portion of the wide circumferential groove 24w, and, depending on the degree of the concentration, damage such as cracks may occur at the bottom portion of the wide circumferential groove 24w.

However, in the tire 2, the size WG of the gap in the full band 48 is smaller than the bottom width WS of the wide circumferential groove 24w. Therefore, the two edges 66 of the band strip 52, which form the gap, are located at the bottom portion of the wide circumferential groove 24w. Since strain is distributed to the respective edges 66, concentration of strain due to the presence of the edges 66 is suppressed in the tire 2. Damage such as cracks is prevented from occurring at the bottom portion of the wide circumferential groove 24w, so that good durability is maintained in the tire 2. From this viewpoint, in the tire 2, the size WG of the gap in the full band 48 is preferably smaller than the bottom width WS of the wide circumferential groove 24w.

In the tire 2, from the viewpoint of effectively preventing damage such as cracks from occurring at the bottom portion of the wide circumferential groove 24w, the ratio (WG/WS) of the size WG of the gap of the band strip 52 to the bottom width WS of the wide circumferential groove 24w is preferably not greater than 0.9, more preferably not greater than 0.8, and further preferably not greater than 0.7. From the viewpoint of weight reduction of the full band 48, the ratio (WG/WS) is preferably not less than 0.1, more preferably not less than 0.2, and further preferably not less than 0.3.

In FIG. 4, the length indicated by a double-headed arrow DS is the distance in the axial direction from the end 46 of the belt 14 to the bottom BT of the shoulder circumferential groove 24s. The length indicated by a double-headed arrow DE is the distance in the axial direction from the end 46 of the belt 14 to the inner end 62 of the edge band 50.

As described above, in the tire 2, the inner end 62 of the edge band 50 is located so as to be spaced apart from the bottom BT of the shoulder circumferential groove 24s in the axial direction. In particular, in the tire 2, the inner end 62 of the edge band 50 is located outward of the shoulder circumferential groove 24s in the axial direction. In this case, the ratio (DE/DS) of the distance DE in the axial direction from the end 46 of the belt 14 to the inner end 62 of the edge band 50 to the distance DS in the axial direction from the end 46 of the belt 14 to the bottom BT of the shoulder circumferential groove 24s is preferably not less than 0.25 and preferably not greater than 0.90.

When the ratio (DE/DS) is set to be not less than 0.25, the edge band 50 effectively holds the shoulder portion 64. An increase in ground-contact length and an increase in ground-contact area are suppressed, so that heat generation caused by the increase in ground-contact area is suppressed. The edge band 50 contributes to a reduction in rolling resistance. From this viewpoint, the ratio (DE/DS) is more preferably not less than 0.35 and further preferably not less than 0.50.

When the ratio (DE/DS) is set to be not greater than 0.90, the inner end 62 of the edge band 50 is located so as to be sufficiently spaced apart from the shoulder circumferential groove 24s. In the tire 2, specific strain being concentrated on the bottom BT portion of the shoulder circumferential groove 24s to cause damage is prevented. The edge band 50 contributes to ensuring durability. From this viewpoint, the ratio (DE/DS) is more preferably not greater than 0.80 and further preferably not greater than 0.65.

In FIG. 4, the length indicated by a double-headed arrow DB is the distance in the axial direction from the equator plane CL to the end 46 of the belt 14. In the tire 2, the distance DB is also referred to as reference width. The position indicated by reference character PB is the position, on the tread surface 22, at which the distance in the axial direction from the equator plane CL corresponds to 0.75 times the reference width DB. In the tire 2, the position PB is also referred to as reference position. The length indicated by a double-headed arrow DG is the distance in the axial direction from the equator plane CL to the outer edge of the shoulder circumferential groove 24s.

If the shoulder circumferential groove 24s is closer to the end of the tread 4, strain is more likely to be concentrated on the bottom portion of the shoulder circumferential groove 24s. However, in the tire 2, the entirety of the shoulder circumferential groove 24s is located inward of the reference position PB in the axial direction, so that specific strain being concentrated on the bottom BT portion of the shoulder circumferential groove 24s to cause damage is effectively prevented. In the tire 2, the influence of the position of the shoulder circumferential groove 24s on durability is suppressed. From this viewpoint, in the tire 2, the entirety of the shoulder circumferential groove 24s is preferably located inward of the reference position PB in the axial direction.

In the tire 2, from the viewpoint of being able to ensure good durability, the ratio (DG/DB) of the distance DG in the axial direction from the equator plane CL to the outer edge of the shoulder circumferential groove 24s to the reference width DB is preferably not greater than 0.75 and more preferably not greater than 0.72. From the viewpoint of drainage performance, the ratio (DG/DB) is preferably not less than 0.55 and more preferably not less than 0.60.

As described above, the band 20 of the tire 2 includes the band cords 54. In the tire 2, cords formed from an organic fiber are used as the band cords 54. Examples of the organic fiber include nylon fibers, rayon fibers, polyester fibers, and aramid fibers. From the viewpoint of exerting holding force, each band cord 54 is preferably a cord formed from a nylon fiber or a hybrid cord obtained by twisting a strand formed from a nylon fiber and a strand formed from an aramid fiber. In particular, in the case where a hybrid cord is used as each band cord 54, even when the full band 48 is formed by sparsely winding the band strip 52, a decrease in the holding force by the full band 48 is effectively suppressed. The tire 2 can have reduced rolling resistance while effectively suppressing the influence on durability and steering stability. From this viewpoint, each band cord 54 is more preferably a hybrid cord obtained by twisting a strand formed from a nylon fiber and a strand formed from an aramid fiber.

As described above, in the tire 2, the inner end 62 of the edge band 50 is located so as to be spaced apart from the bottom BT of the shoulder circumferential groove 24s in the axial direction. The gap in the full band 48 is preferably formed such that the size WG thereof is smaller than the bottom width WS of the wide circumferential groove 24w. Accordingly, concentration of strain on the bottom portion of each circumferential groove 24 is suppressed, so that durability is improved. Therefore, in the tire 2, a thin tread having a thickness TA of 11 mm or less can be adopted as the tread 4. The thin tread 4 contributes to a reduction in rolling resistance. From this viewpoint, in the tire 2, more preferably, the inner end 62 of the edge band 50 is located so as to be spaced apart from the bottom BT of the shoulder circumferential groove 24s in the axial direction, and the gap in the full band 48 is formed such that the size WG thereof is smaller than the bottom width WS of the wide circumferential groove 24w.

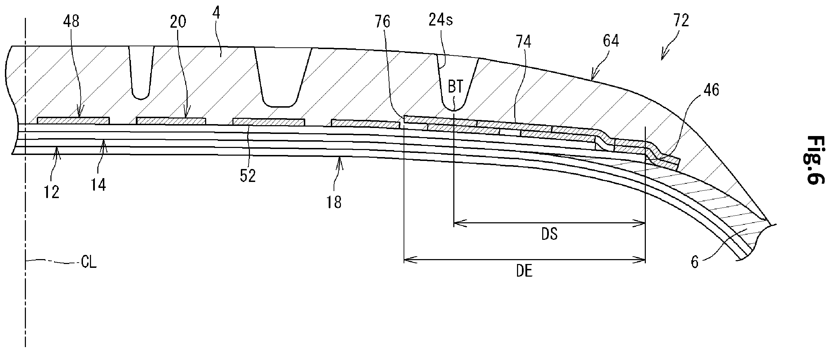

FIG. 6 shows a part of a tire 72 according to another embodiment of the present invention. FIG. 6 shows a part of a cross-section of the tire 72 along a plane including the rotation axis of the tire 72. In FIG. 6, the right-left direction is the axial direction of the tire 72, and the up-down direction is the radial direction of the tire 72. The direction perpendicular to the surface of the sheet of FIG. 6 is the circumferential direction of the tire 72.

The tire 72 has substantially the same configuration as the configuration of the tire 2 shown in FIG. 1, except for the configurations of edge bands 74. The same elements as those of the tire 2 shown in FIG. 1 are designated by the same reference characters, and the description thereof is omitted.

In the tire 72 as well, similar to the tire 2 shown in FIG. 1, the band 20 is formed by spirally winding the band strip 52, and a cross-section of the band 20 includes a large number of cross-sections of the band strip 52. Since the full band 48 is formed by sparsely winding the band strip 52, a plurality of cross-sections of the band strip 52 are aligned with gaps therebetween in a cross-section of the full band 48. Since the right and left edge bands 74 are each formed by densely winding the band strip 52, a plurality of cross-sections of the band strip 52 are aligned without any gap therebetween in a cross-section of each edge band 74.

In the tire 72, the full band 48 formed by sparsely winding the band strip 52 contributes to weight reduction. Each edge band 74 formed by densely winding the band strip 52 effectively holds the shoulder portion 64 together with the full band 48. An increase in ground-contact length and an increase in ground-contact area are suppressed, so that heat generation caused by the increase in ground-contact area is suppressed. In the tire 72, the weight reduction of the full band 48 can effectively contribute to a reduction in rolling resistance. The tire 72 can have reduced rolling resistance.

Moreover, in the tire 72, since an increase in ground-contact area is suppressed, good responsiveness is maintained. In the tire 72, the influence of the weight reduction of the full band 48 on steering stability is suppressed. The tire 72 can have reduced rolling resistance while suppressing the influence on steering stability.

In the tire 72, an inner end 76 of the edge band 74 is located so as to be spaced apart from the bottom BT of the shoulder circumferential groove 24s in the axial direction. In the tire 72, specific strain being concentrated on the bottom BT portion of the shoulder circumferential groove 24s to cause damage such as cracks is prevented. The tire 72 can have reduced rolling resistance while suppressing the influence on durability and steering stability.

In FIG. 6, the length indicated by a double-headed arrow DS is the distance in the axial direction from the end 46 of the belt 14 to the bottom BT of the shoulder circumferential groove 24s. The length indicated by a double-headed arrow DE is the distance in the axial direction from the end 46 of the belt 14 to an inner end 76 of the edge band 74.

As described above, in the tire 72, the inner end 76 of the edge band 74 is located so as to be spaced apart from the bottom BT of the shoulder circumferential groove 24s in the axial direction. In particular, in the tire 72, the inner end 76 of the edge band 74 is located inward of the shoulder circumferential groove 24s in the axial direction. In this case, the ratio (DE/DS) of the distance DE in the axial direction from the end 46 of the belt 14 to the inner end 76 of the edge band 74 to the distance DS in the axial direction from the end 46 of the belt 14 to the bottom BT of the shoulder circumferential groove 24s is preferably not less than 1.20 and preferably not greater than 1.55.

When the ratio (DE/DS) is set to be not less than 1.20, the inner end 76 of the edge band 74 is located so as to be sufficiently spaced apart from the shoulder circumferential groove 24s. In the tire 72, specific strain being concentrated on the bottom BT portion of the shoulder circumferential groove 24s to cause damage is prevented. The edge band 74 contributes to ensuring durability. From this viewpoint, the ratio (DE/DS) is more preferably not less than 1.22 and further preferably not less than 1.25.

When the ratio (DE/DS) is set to be not greater than 1.55, the length of the edge band 74 is appropriately maintained, and the influence of the mass of the edge band 74 on rolling resistance is suppressed. In the tire 72, low rolling resistance is maintained. From this viewpoint, the ratio (DE/DS) is more preferably not greater than 1.50 and further preferably not greater than 1.45.

As described above, according to the present invention, a tire that can have reduced rolling resistance while suppressing the influence on durability and steering stability is obtained. In particular, the present invention exhibits a remarkable effect in a tire whose speed symbol in the JATMA standard is W or more.

### EXAMPLES

Hereinafter, the present invention will be described in further detail by means of examples, etc., but the present invention is not limited to these examples but only by the appended claims.

### [Example 1]

A pneumatic tire (tire size = 215/55R17 94W), for a passenger car, having the basic structure shown in FIG. 1 and FIG. 4 and having specifications shown in Table 1 below was obtained.

In Example 1, the band was formed using the band strip shown in FIG. 2. The full band (FB) was formed by sparsely winding the band strip, and the right and left edge bands (EB) were each formed by densely winding the band strip. This is represented as "L" in the cell for FB and "T" in the cell for EB in Table 1. A hybrid cord formed by twisting a strand (configuration = 940 dtex/1) formed from a nylon fiber and a strand (configuration = 1100 dtex/1) formed from an aramid fiber was used as each band cord.

The ratio (WG/WS) of the size WG of the gap in the full band to the bottom width WS of the wide circumferential groove was set to 0.36. The ratio (DG/DB) of the distance DG in the axial direction from the equator plane to the outer edge of the shoulder circumferential groove to the reference width DB was set to 0.62. The ratio (DE/DS) of the distance DE in the axial direction from the end of the belt to the inner end of the edge band to the distance DS in the axial direction from the end of the belt to the bottom BT of the shoulder circumferential groove was set to 0.60.

### [Comparative Example 1]

A tire of Comparative Example 1 was obtained in the same manner as Example 1, except that the band was composed of only a full band. In Comparative Example 1, the full band is composed of a center portion formed by sparsely winding the band strip and a pair of side portions each formed by densely winding the band strip. This is represented as "T+L" in the cell for FB in Table 1.

In Comparative Example 1, the side portions correspond to the edge bands in Example 1, and the distance in the axial direction from the end of the belt to the inner end of each side portion was set to be 0.60 times the distance DS in the axial direction from the end of the belt to the bottom BT of the shoulder circumferential groove. The size of the gap in the center portion was set to be 0.36 times the bottom width WS of the wide circumferential groove.

### [Comparative Example 2]

A tire of Comparative Example 2 was obtained in the same manner as Example 1, except that the full band was formed by winding the band strip without any gap. The fact that the full band was formed by densely winding the band strip is represented as "T" in the cell for FB in Table 1.

### [Comparative Example 3]

A tire of Comparative Example 3 was obtained in the same manner as Example 1, except that the distance DE was changed such that the ratio (DE/DS) was as shown in Table 1 below. In Comparative Example 3, the position of the inner end of each edge band coincides with the position of the bottom BT of the shoulder circumferential groove in the axial direction.

### [Example 2]

A tire of Example 2 was obtained in the same manner as Example 1, except that the size WG of the gap in the full band was changed such that the ratio (WG/WS) was as shown in Table 1 below.

### [Example 3]

A pneumatic tire (tire size = 195/55R16 87W), for a passenger car, having the basic structure shown in FIG. 6 and having specifications shown in Table 2 below was obtained.

In Example 3 as well, the band was formed using the band strip shown in FIG. 2. The full band (FB) was formed by sparsely winding the band strip, and the right and left edge bands (EB) were each formed by densely winding the band strip. This is represented as "L" in the cell for FB and "T" in the cell for EB in Table 2. A hybrid cord formed by twisting a strand (configuration = 940 dtex/1) formed from a nylon fiber and a strand (configuration = 1100 dtex/1) formed from an aramid fiber was used as each band cord.

In Example 3, the ratio (WG/WS) was set to 0.63. The ratio (DG/DB) was set to 0.72. The ratio (DE/DS) was set to 1.26.

### [Comparative Example 4]

A tire of Comparative Example 4 was obtained in the same manner as Example 3, except that the band was composed of only a full band. In Comparative Example 4, similar to Comparative Example 1, the full band is composed of a center portion formed by sparsely winding the band strip and a pair of side portions each formed by densely winding the band strip.

In Comparative Example 4, the size of the gap in the center portion was set to be 0.63 times the bottom width WS of the wide circumferential groove. The distance in the axial direction from the end of the belt to the inner end of each side portion was set to be 1.26 times the distance DS in the axial direction from the end of the belt to the bottom BT of the shoulder circumferential groove.

### [Comparative Example 5]

A tire of Comparative Example 5 was obtained in the same manner as Example 3, except that the full band was formed by winding the band strip without any gap.

### [Comparative Example 6]

A tire of Comparative Example 6 was obtained in the same manner as Example 3, except that the distance DE was changed such that the ratio (DE/DS) was as shown in Table 2 below. In Comparative Example 6, the position of the inner end of each edge band coincides with the position of the bottom BT of the shoulder circumferential groove in the axial direction.

### [Example 4]

A tire of Example 4 was obtained in the same manner as Example 3, except that the distance DG was changed such that the ratio (DG/DB) was as shown in Table 2 below.

### [Example 5]

A tire of Example 5 was obtained in the same manner as Example 3, except that the size WG of the gap in the full band was changed such that the ratio (WG/WS) was as shown in Table 2 below.

### [Steering Stability]

Test tires were fitted to normal rims and inflated with air to adjust the internal pressures thereof to a normal internal pressure. The tires were mounted to a test vehicle (passenger car), and the test vehicle was driven on a test course having a dry asphalt road surface. The driver made evaluation (sensory evaluation) for steering stability. The results are shown as indexes in Table 1 and Table 2 below. The higher the value is, the better the steering stability of the tire is.

### [Rolling Resistance Coefficient (RRC)]

Using a rolling resistance testing machine, a rolling resistance coefficient (RRC) was measured when a test tire ran on a drum at a speed of 80 km/h under the following conditions. The results are shown as indexes in Table 1 and Table 2 below. The higher the value is, the lower the rolling resistance of the tire is.

Examples 1 and 2 and Comparative Examples 1 to 3
Rim: 7.0J
Internal pressure: 250 kPa
Vertical load: 5.88 kN

Examples 3 to 5 and Comparative Examples 4 to 6
Rim: 6.0J
Internal pressure: 250 kPa
Vertical load: 4.82 kN

### [Durability]

A tire was fitted to a normal rim and inflated with air to adjust the internal pressure thereof to a normal internal pressure. The tire was mounted to a drum type tire testing machine. A vertical load was applied to the tire, and the tire was caused to run on a drum (radius = 1.7 m). The running speed was set to 100 km/h. The running distance until the tire became broken was measured. The results are shown as indexes in Table 1 and Table 2 below. The higher the value is, the better the durability of the tire is. For Examples 1 and 2 and Comparative Examples 1 to 3, the vertical load was set to 8.86 kN. For Examples 3 to 5 and Comparative Examples 4 to 6, the vertical load was set to 7.33 kN.

### [Combined Performance]

The sum of the indexes obtained in the respective evaluations was calculated. The results are shown in the cells for "combined performance" in Table 1 and Table 2 below. The higher the value is, the better the evaluation is.

**[Table 1]**

| | Comparative Example 2 | Comparative Example 1 | Example 1 | Comparative Example 3 | Example 2 |
|---|---|---|---|---|---|
| FB | T | T+L | L | L | L |
| EB | T | - | T | T | T |
| WG/WS [-] | - | - | 0.36 | 0.36 | 1.43 |
| DG/DB [-] | 0.62 | 0.62 | 0.62 | 0.62 | 0.62 |
| DE/DS [-] | 0.60 | - | 0.60 | 1.00 | 0.60 |
| Steering stability | 4 | 3 | 4 | 4 | 4 |
| RRC | 2 | 3 | 4 | 4 | 4 |
| Durability | 4 | 3 | 4 | 2 | 3 |
| Combined performance | 10 | 9 | 12 | 10 | 11 |

**[Table 2]**

| | Comparative Example 5 | Comparative Example 4 | Example 3 | Comparative Example 6 | Example 4 | Example 5 |
|---|---|---|---|---|---|---|
| FB | T | T+L | L | L | L | L |
| EB | T | - | T | T | T | T |
| WG/WS [-] | - | - | 0.63 | 0.63 | 0.63 | 1.46 |
| DG/DB [-] | 0.72 | 0.72 | 0.72 | 0.72 | 0.81 | 0.72 |
| DE/DS [-] | 1.26 | - | 1.26 | 1.00 | 1.74 | 1.26 |
| Steering stability | 4 | 3 | 4 | 4 | 4 | 4 |
| RRC | 2 | 3 | 4 | 4 | 4 | 4 |
| Durability | 4 | 3 | 4 | 2 | 3 | 3 |
| Combined performance | 10 | 9 | 12 | 10 | 11 | 11 |

As shown in Table 1 and Table 2, in each Example, a reduction in rolling resistance is achieved while the influence on durability and steering stability is suppressed. From the evaluation results, advantages of the present invention are clear.

The above-described technology for reducing rolling resistance while suppressing the influence on durability and steering stability can also be applied to various tires.

## Claims

1. A tire (2, 72) comprising:
a tread (4) having a plurality of circumferential grooves (24, 24s, 24c, 24w) formed thereon;
a belt (14) located inward of the tread (4) in a radial direction; and
a band (20) located between the tread (4) and the belt (14) in the radial direction and formed of a spirally wound band strip (52) including a plurality of band cords (54) aligned with each other, wherein
the band (20) includes a full band (48) covering an entirety of the belt (14), and a pair of edge bands (50, 74) disposed so as to be spaced apart from each other in an axial direction and each covering an end (46) of the belt (14),
a cross-section of the band (20) includes a large number of cross-sections of the band strip (52),
a plurality of cross-sections of the band strip (52) are aligned with a gap therebetween in a cross-section of the full band (48),
a plurality of cross-sections of the band strip (52) are aligned without any gap therebetween in a cross-section of each edge band (50, 74),
among the plurality of circumferential grooves (24, 24s, 24c, 24w), a circumferential groove (24s) located on each outer side in the axial direction is a shoulder circumferential groove (24s), and
an inner end (62, 76) of each edge band (50, 74) is located so as to be spaced apart from a bottom of the shoulder circumferential groove (24s) in the axial direction,
**characterized in that**
on a reference ground-contact surface obtained by applying a normal load as a vertical load to the tire (2, 72) and bringing the tire (2, 72) into contact with a flat road surface in a state where the tire (2, 72) is fitted to a normal rim (R), an internal pressure of the tire (2, 72) is adjusted to a normal internal pressure, and a camber angle of the tire (2, 72) is set to 0°,
a shape index (F) of the reference ground-contact surface that is represented as a ratio (P100/P80) of an equator ground-contact length (P100) measured along the equator plane (CL) to a reference ground-contact length (P80) at a position corresponding to a width of 80% of a reference ground-contact width of the reference ground-contact surface is not less than 1.10 and not greater than 1.50.

2. The tire (2, 72) according to claim 1, wherein
among the plurality of circumferential grooves (24, 24s, 24c, 24w), a circumferential groove (24c) having a maximum groove width is a wide circumferential groove (24w), and
a size of the gap is smaller than a bottom width of the wide circumferential groove (24w).

3. The tire (2, 72) according to claim 1 or 2, wherein
a distance (DB) in the axial direction from an equator plane (CL) to the end (46) of the belt (14) is a reference width (DB),
a position (PB) at which a distance in the axial direction from the equator plane (CL) corresponds to 0.75 times the reference width (DB) is a reference position (PB), and
the shoulder circumferential groove (24s) is located inward of the reference position (PB) in the axial direction.

4. The tire (2, 72) according to any one of claims 1 to 3, wherein each band cord (54) is a cord formed from a nylon fiber or a hybrid cord obtained by twisting a strand formed from a nylon fiber and a strand formed from an aramid fiber.

5. The tire (2) according to any one of claims 1 to 4, wherein
the inner end (62) of each edge band (50) is located outward of the shoulder circumferential groove (24s) in the axial direction, and
a ratio (DE/DS) of a distance (DE) in the axial direction from the end (46) of the belt (14) to the inner end (62) of each edge band (50) to a distance (DS) in the axial direction from the end (46) of the belt (14) to the bottom of the shoulder circumferential groove (24s) is not less than 0.25 and not greater than 0.90.

6. The tire (72) according to any one of claims 1 to 4, wherein
the inner end (76) of each edge band (74) is located inward of the shoulder circumferential groove (24s) in the axial direction, and
a ratio (DE/DS) of a distance (DE) in the axial direction from the end (46) of the belt (14) to the inner end (76) of each edge band (74) to a distance (DS) in the axial direction from the end (46) of the belt (14) to the bottom of the shoulder circumferential groove (24s) is not less than 1.20 and not greater than 1.55.

## Patentansprüche

1. Reifen (2, 72), umfassend:
eine Lauffläche (4) mit einer Vielzahl von daran ausgebildeten Umfangsrillen (24, 24s, 24c, 24w);
einen Gürtel (14), der in einer radialen Richtung innen von der Lauffläche (4) angeordnet ist; und
ein Band (20), das in der radialen Richtung zwischen der Lauffläche (4) und dem Gürtel (14) angeordnet ist und aus einem spiralförmig gewickelten Bandstreifen (52) gebildet ist, der eine Vielzahl von miteinander ausgerichteten Bandkorden (54) umfasst, wobei
das Band (20) ein Vollband (48), das den gesamten Gürtel (14) bedeckt, und ein Paar Randbänder (50, 74) umfasst, die so angeordnet sind, dass sie in einer axialen Richtung voneinander beabstandet sind und jeweils ein Ende (46) des Gürtels (14) bedecken,
ein Querschnitt des Bandes (20) eine große Anzahl von Querschnitten des Bandstreifens (52) umfasst,
eine Vielzahl von Querschnitten des Bandstreifens (52) in einem Querschnitt des Vollbandes (48) mit einem Spalt dazwischen ausgerichtet sind,
eine Vielzahl von Querschnitten des Bandstreifens (52) in einem Querschnitt jedes Randstreifens (50, 74) ohne irgendeinen Spalt dazwischen ausgerichtet sind,
unter der Vielzahl von Umfangsrillen (24, 24s, 24c, 24w) eine Umfangsrille (24s), die sich in der axialen Richtung an jeder Außenseite befindet, eine Schulterumfangsrille (24s) ist,
ein inneres Ende (62, 76) jedes Randbandes (50, 74) so angeordnet ist, dass es in der axialen Richtung von einem Boden der Schulterumfangsrille (24s) beabstandet ist,
**dadurch gekennzeichnet, dass**
an einer Referenz-Bodenkontaktfläche, die erhalten wird, indem eine normale Last als eine vertikale Last auf den Reifen (2, 72) aufgebracht wird und der Reifen (2, 72) mit einer flachen Straßenoberfläche in einem Zustand in Kontakt gebracht wird, in dem der Reifen (2, 72) auf eine normale Felge (R) aufgezogen ist, ein Innendruck des Reifens (2, 72) auf einen normalen Innendruck eingestellt ist und ein Sturzwinkel des Reifens (2, 72) auf 0° eingestellt ist,
ein Formindex (F) der Referenz-Bodenkontaktfläche, der als ein Verhältnis (P100/P80) einer Äquator-Bodenkontaktlänge (P100), gemessen entlang der Äquatorebene (CL), zu einer Referenz-Bodenkontaktlänge (P80) an einer Position, die einer Breite von 80 % einer Referenz-Bodenkontaktbreite der Referenz-Bodenkontaktfläche entspricht, dargestellt ist, nicht kleiner als 1,10 und nicht größer als 1,50 ist.

2. Reifen (2, 72) nach Anspruch 1, wobei
unter der Vielzahl von Umfangsrillen (24, 24s, 24c, 24w) eine Umfangsrille (24c) mit einer maximalen Rillenbreite eine breite Umfangsrille (24w) ist, und
eine Größe des Spalts kleiner als eine Breite des Bodens der breiten Umfangsrille (24w) ist.

3. Reifen (2, 72) nach Anspruch 1 oder 2, wobei
ein Abstand (DB) in der axialen Richtung von einer Äquatorebene (CL) zu dem Ende (46) des Gürtels (14) eine Referenzbreite (DB) ist,
eine Position (PB), bei der ein Abstand in der axialen Richtung von der Äquatorebene (CL) dem 0,75-fachen der Referenzbreite (DB) entspricht, eine Referenzposition PB (ist), und
die Schulterumfangsrille (24s) sich in der axialen Richtung innen von der Referenzposition (PB) befindet.

4. Reifen (2, 72) nach einem der Ansprüche 1 bis 3, wobei jeder Bandkord (54) einen Kord ist, der aus einer Nylonfaser gebildet ist, oder ein Hybridkord ist, der durch Verdrillen eines Strangs, der aus einer Nylonfaser gebildet ist, und eines Strangs, der aus einer Aramidfaser gebildet ist, erhalten ist.

5. Reifen (2) nach einem der Ansprüche 1 bis 4, wobei
das innere Ende (62) des Randbandes (50) in der axialen Richtung außen von der Schulterumfangsrille (24s) angeordnet ist, und
ein Verhältnis (DE/DS) eines Abstands (DE) in der axialen Richtung von dem Ende (46) des Gürtels (14) zu dem inneren Ende (62) jedes Randbandes (50) zu einem Abstand (DS) in der axialen Richtung von dem Ende (46) des Gürtels (14) zu dem Boden der Schulterumfangsrille (24s) nicht kleiner als 0,25 und nicht größer als 0,90 ist.

6. Reifen (72) nach einem der Ansprüche 1 bis 4, wobei
das innere Ende (76) jedes Randbandes (74) in der axialen Richtung außen von der Schulterumfangsrille (24s) angeordnet ist, und
ein Verhältnis (DE/DS) eines Abstands (DE) in der axialen Richtung von dem Ende (46) des Gürtels (14) zu dem inneren Ende (76) jedes Randbandes (74) zu einem Abstand (DS) in der axialen Richtung von dem Ende (46) des Gürtels (14) zu dem Boden der Schulterumfangsrille (24s) nicht kleiner als 1,20 und nicht größer als 1,55 ist.

## Revendications

1. Pneumatique (2, 72) comprenant :
une bande de roulement (4) ayant une pluralité de rainures circonférentielles (24, 24s, 24c, 24w) formées sur celle-ci ;
une ceinture (14) située à l'intérieur de la bande de roulement (4) dans une direction radiale ; et
une bande (20) située entre la bande de roulement (4) et la ceinture (14) dans la direction radiale et formée d'un ruban de bande (52) enroulé en spirale incluant une pluralité de câblés de bande (54) alignés les uns avec les autres, dans lequel
la bande (20) inclut une bande complète (48) recouvrant une totalité de la ceinture (14), et une paire de bandes de bords (50, 74) disposées de manière à être espacées les unes des autres dans une direction axiale et couvrant chacune une extrémité (46) de la ceinture (14),
une section transversale de la bande (20) inclut un grand nombre de sections transversales du ruban de bande (52),
une pluralité de sections transversales du ruban de bande (52) sont alignées avec un intervalle de celles-ci dans une section transversale de la bande complète (48),
une pluralité de sections transversales du ruban de bande (52) sont alignées sans aucun intervalle entre celles-ci dans une section transversale de chaque bande de bord (50, 74),
parmi la pluralité de rainures circonférentielles (24, 24s, 24c, 24w), une rainure circonférentielle (24s) située sur chaque côté extérieur dans la direction axiale est une rainure circonférentielle d'épaulement (24s), et
une extrémité intérieure (62, 76) de chaque bande de bord (50, 74) est située de manière à être espacée d'un fond de la rainure circonférentielle d'épaulement (24s) dans la direction axiale,
**caractérisé en ce que**
sur une surface de contact au sol de référence obtenue en appliquant une charge normale en tant que charge verticale sur le pneumatique (2, 72) et en amenant le pneumatique (2, 72) en contact avec une surface routière plate dans un état dans lequel le pneumatique (2, 72) est monté sur une jante normale (R), une pression interne du pneumatique (2, 72) est ajustée à une pression interne normale, et un angle de cambrure du pneumatique (2, 72) est fixé à 0°,
un indice de forme (F) de la surface de contact au sol de référence qui est représenté en tant que rapport (P100/P80) d'une longueur de contact au sol d'équateur (P100) mesurée le long du plan d'équateur (CL) sur une longueur de contact au sol de référence (P80) à une position correspondant à une largeur de 80 % d'une largeur de contact au sol de référence de la surface de contact au sol de référence n'est pas inférieur à 1,10 et n'est pas supérieur à 1,50.

2. Pneumatique (2, 72) selon la revendication 1, dans lequel
parmi la pluralité de rainures circonférentielles (24, 24s, 24c, 24w), une rainure circonférentielle (24c) ayant une largeur de rainure maximum est une rainure circonférentielle large (24w), et
une taille de l'intervalle est plus petite qu'une largeur de fond de la rainure circonférentielle large (24w).

3. Pneumatique (2,72) selon la revendication 1 ou 2, dans lequel
une distance (DB) dans la direction axiale depuis un plan d'équateur (CL) jusqu'à l'extrémité (46) de la ceinture (14) est une largeur de référence (DB), une position (PB) à laquelle une distance dans la direction axiale depuis le plan d'équateur (CL) correspond à 0,75 fois la largeur de référence (DB) est une position de référence (PB), et
la rainure circonférentielle d'épaulement (24s) est située à l'intérieur de la position de référence (PB) dans la direction axiale.

4. Pneumatique (2, 72) selon l'une quelconque des revendications 1 à 3, dans lequel chaque câblé de bande (54) est un câblé formé à partir d'une fibre de nylon ou un câblé hybride obtenu en torsadant un toron formé à partir d'une fibre de nylon et un toron formé à partir d'une fibre d'aramide.

5. Pneumatique (2) selon l'une quelconque des revendications 1 à 4, dans lequel
l'extrémité intérieure (62) de chaque bande de bord (50) est située à l'extérieur de la rainure circonférentielle d'épaulement (24s) dans la direction axiale, et
un rapport (DE/DS) d'une distance (DE) dans la direction axiale depuis l'extrémité (46) de la ceinture (14) jusqu'à l'extrémité intérieure (62) de chaque bande de bord (50) sur une distance (DS) dans la direction axiale depuis l'extrémité (46) de la ceinture (14) jusqu'au fond de la rainure circonférentielle d'épaulement (24s) n'est pas inférieur à 0,25 et n'est pas supérieur à 0,90.

6. Pneumatique (72) selon l'une quelconque des revendications 1 à 4, dans lequel
l'extrémité intérieure (76) de chaque bande de bord (74) est située à l'intérieur de la rainure circonférentielle d'épaulement (24s) dans la direction axiale, et
un rapport (DE/DS) d'une distance (DE) dans la direction axiale depuis l'extrémité (46) de la ceinture (14) jusqu'à l'extrémité intérieure (76) de chaque bande de bord (74) sur une distance (DS) dans la direction axiale depuis l'extrémité (46) de la ceinture (14) jusqu'au fond de la rainure circonférentielle d'épaulement (24s) n'est pas inférieur à 1,20 et n'est pas supérieur à 1,55.
